# FASCICULE DE BREVET EUROPEEN

(11) **EP 2 280 534 B1**
(45) Date de publication et mention de la délivrance du brevet: **07.12.2011**
(21) Numéro de dépôt: 10170530.9
(22) Date de dépôt: 22.07.2010
(51) Int. Cl.: H04N 1/00

(54) **Appareil de traitement de feuilles comprenant des moyens pour numériser une série de feuilles par déplacement de son organe d'acquisition numérique**
Blattverarbeitungsvorrichtung zur Abtastung einer Blattfolge durch eine bewegliche Lesevorrichtung
Apparatus for sheet processing comprising means for scanning a batch of sheets using a moving reading device

(30) Priorité: 31.07.2009 FR 0903774
(43) Date de publication de la demande: 02.02.2011
(73) Titulaire: SAGEMCOM DOCUMENTS SAS, 92500 Rueil Malmaison (FR)
(72) Inventeur: Sehier, Nicolas, 92500 Rueil Malmaison (FR)
(74) Mandataire: Parzy, Benjamin Alain

(56) Documents cités:
- EP-A- 1 761 027
- EP-A- 1 971 121
- US-A- 5 907 759
- US-A1- 2002 051 665
- US-B1- 6 203 003

## Description

L'invention concerne un appareil de traitement de feuilles, comprenant une vitre ainsi qu'un organe d'acquisition mobile par rapport à cette vitre et incluant une matrice photosensible associée à une source lumineuse, ainsi qu'un chargeur incluant un chemin d'acheminement de feuilles à traiter et un chemin d'évacuation des feuilles traitées ainsi que des rouleaux commandés pour déplacer des feuilles dans ces chemins.

### ARRIERE PLAN DE L'INVENTION

Dans ce type de scanner, l'utilisateur peut d'une part ouvrir le chargeur pour placer manuellement une feuille à traiter sur la vitre avant de refermer le chargeur sur la vitre et déclencher le traitement de cette feuille. Dans ce cas, l'organe d'acquisition est déplacé le long de la vitre pour numériser la face de la feuille qui est en regard de la vitre. Lorsque le traitement est terminé, l'utilisateur ouvre le chargeur pour extraire manuellement la feuille qui a été numérisée.

Selon un autre mode de fonctionnement, l'appareil permet de traiter une série de feuilles l'une après l'autre, selon une séquence automatisée. Dans ce cas, le chargeur est tout d'abord refermé sur la vitre, et l'utilisateur place la pile de feuilles à traiter dans un bac d'approvisionnement du chargeur, avant de commander leur traitement.

Le bac d'approvisionnement est situé en vis-à-vis d'une entrée du chemin d'approvisionnement qui est équipé dans cette zone d'un rouleau appelé rouleau chargeur. Lors du traitement, une première feuille est extraite du bac d'approvisionnement par le rouleau chargeur pour être engagée dans le chemin d'approvisionnement.

La sortie du chemin d'approvisionnement est située au niveau d'une partie avant de la face supérieure de la vitre, à faible distance d'une entrée du chemin d'évacuation qui s'étend ainsi sensiblement dans le prolongement de la sortie du chemin d'acheminement.

Lors du traitement d'une série de feuilles, l'organe d'acquisition occupe une position fixe, en partie avant de la vitre, en étant placé au droit d'une région située entre la sortie du chemin d'acheminement et l'entrée du chemin d'évacuation.

Lorsque la feuille à traiter est déplacée dans le chemin d'acheminement, son extrémité atteint d'abord la sortie du chemin d'acheminement pour passer entre la face inférieure du chargeur et la face supérieure de la vitre, et elle est ravalée par l'entrée du chemin d'évacuation. La distance séparant la sortie et l'entrée de ces deux chemins est de l'ordre de quelques centimètres.

Ainsi, la numérisation de l'ensemble de la feuille est assurée par l'organe d'acquisition qui est alors fixe, au fur et à mesure que cette feuille passe entre la sortie du chemin d'acquisition et l'entrée du chemin d'évacuation.

Les différentes feuilles de la pile sont ainsi traitées l'une après l'autre, et successivement empilées dans le bac de collecte, jusqu'à ce que le bac d'approvisionnement soit vide.

Dans le traitement en série, il est indispensable que le déplacement de la feuille, lorsqu'elle passe entre la sortie du chemin d'acheminement et l'entrée du chemin d'évacuation, soit géré de manière très fine. Cette finesse est nécessaire pour que la vitesse soit la plus régulière possible, afin que la feuille numérisée ne présente pas de distorsion par rapport à l'original.

Dans les solutions connues, cette question est résolue en utilisant des moteurs de type pas à pas pour entraîner les rouleaux qui assurent le déplacement des feuilles dans les chemins d'acheminement et d'éjection, ce qui accroît significativement le coût de fabrication et de développement, d'une part du fait du coût élevé de tels moteurs, et d'autre part du fait de la complexité de leur commande.

### OBJET DE L'INVENTION

Le but de l'invention est de proposer une solution pour remédier à cet inconvénient.

### RESUME DE L'INVENTION

A cet effet, l'invention a pour objet un appareil de traitement de feuilles, comprenant une vitre ainsi qu'un organe d'acquisition mobile par rapport à cette vitre, cet organe d'acquisition incluant une matrice photosensible et une source lumineuse, cet appareil comprenant un chargeur situé au dessus de la vitre, ce chargeur incluant un chemin d'acheminement des feuilles à traiter ainsi qu'un chemin d'évacuation des feuilles traitées, ce chargeur étant équipé de rouleaux commandés pour déplacer des feuilles dans ces chemins, caractérisé en ce que le chemin d'acheminement et le chemin d'évacuation débouchent conjointement dans une même voie de transfert située au niveau d'une extrémité d'une face supérieure de la vitre en étant orientée tangentiellement à cette face supérieure, en ce que le chargeur comporte un rouleau de positionnement situé à proximité de la voie de transfert et au dessus de la vitre, et un organe d'aiguillage assurant qu'une feuille déplacée par le rouleau de positionnement depuis la vitre vers la voie de transfert est orientée dans le chemin d'évacuation.

Chaque feuille est amenée via le chemin d'acheminement jusqu'au rouleau de positionnement, puis elle est positionnée le long de la vitre par ce rouleau avant d'être numérisée par déplacement de l'organe d'acquisition. Le rouleau de positionnement est ensuite actionné pour déplacer la feuille vers la voie de transfert où elle est alors orientée par l'organe d'aiguillage vers le chemin d'évacuation pour être éjectée dans un bac de collecte.

La numérisation d'une série de feuilles est ainsi assurée en déplaçant l'organe d'acquisition par rapport à la vitre, de sorte que les moteurs actionnant les rouleaux n'ont pas obligatoirement à être des moteurs de type pas-à-pas ou analogue.

L'invention concerne également un appareil tel que défini ci-dessus, dans lequel le rouleau de positionnement comprend un méplat.

Une feuille introduite depuis le chemin d'acheminement vers la face supérieure de la vitre peut ainsi s'engager entre le méplat et la face supérieure de la vitre. Il n'est donc pas nécessaire de synchroniser le rouleau de positionnement avec les rouleaux d'entraînement équipant le chemin d'acheminement. La situation est analogue lors de l'extraction de la feuille qui a été numérisée.

L'invention concerne également un appareil tel que défini ci-dessus, dans lequel le rouleau de positionnement est monté mobile entre une position dans laquelle il est plaqué contre la vitre et une position dans laquelle il est écarté de la vitre.

L'invention concerne également un appareil tel que défini ci-dessus, dans lequel le chargeur comprend un rouleau d'acheminement et un rouleau d'évacuation ainsi qu'un rouleau central entraînés conjointement, le rouleau central étant en appui sur le rouleau d'acheminement au niveau du chemin d'acheminement, le rouleau central étant en appui sur le rouleau d'évacuation au niveau du chemin d'évacuation.

Les rouleaux assurant l'amenée d'une feuille à traiter vers la vitre, et l'évacuation d'une feuille vers le bac de collecte peuvent ainsi être actionnés par un même moteur unique.

L'invention concerne également un appareil tel que défini ci-dessus, dans lequel le chargeur comprend un plateau supérieur déplaçable entre une position haute dans laquelle il est espacé de la vitre et une position dite basse dans laquelle il est en appui sur la vitre ou sur une feuille située sur cette vitre.

La qualité de la numérisation de la feuille est ainsi améliorée par le fait que cette feuille est nécessairement plaquée à la face supérieure de la vitre dès que le plateau est abaissé.

L'invention concerne également un appareil tel que défini ci-dessus, dans lequel l'organe d'aiguillage comprend un levier rotatif situé à la jonction des chemins et de la voie de transfert, ce levier présentant une extrémité en pointe orientée en direction opposée des chemins, cette extrémité en pointe étant mobile entre une position basse en appui sur une face inférieure de la voie de transfert et une position haute espacée de cette face inférieure.

L'organe d'aiguillage constitue un organe complètement passif, qui est placé en position haute par l'arrivée d'une feuille en provenance du chemin d'acheminement.

### BREVE DESCRIPTION DES FIGURES

La figure 1 est une représentation schématique de l'appareil selon l'invention en début d'acheminement d'une première feuille à traiter ;
La figure 2 est une représentation schématique de l'appareil selon l'invention lorsque le bord avant de la première feuille à traiter atteint la vitre ;
La figure 3 est une représentation schématique de l'appareil selon l'invention lorsque la feuille à traiter est déplacée le long de la vitre par les rouleaux du chargeur;
La figure 4 est une représentation schématique de l'appareil selon l'invention lorsque la feuille à traiter est déplacée par le rouleau de positionnement le long de la vitre ;
La figure 5 est une représentation schématique de l'appareil selon l'invention lorsque la première feuille à traiter a complètement dépassé l'organe d'aiguillage ;
La figure 6 est une représentation schématique de l'appareil selon l'invention lorsque en début de numérisation de la première feuille ;
La figure 7 est une représentation schématique de l'appareil selon l'invention lorsqu'une seconde feuille à traiter est acheminée avant la fin de la numérisation de la première feuille traitée;
La figure 8 est une représentation schématique de l'appareil selon l'invention lorsque la première feuille traitée est ravalée dans le chemin d'évacuation en même temps que la seconde feuille continue d'être acheminée vers la vitre ;
La figure 9 est une représentation schématique de l'appareil selon l'invention lorsque la première feuille traitée est déplacée dans le chemin d'évacuation en même temps que la seconde feuille à traiter est déplacée dans le chemin d'acheminement et le long de la vitre par les rouleaux du chargeur ;
La figure 10 est une représentation schématique de l'appareil selon l'invention après traitement d'une pile de feuilles.

### DESCRIPTION DETAILLEE DE L'INVENTION

L'idée à la base de l'invention est de réaliser le traitement d'un ensemble de feuilles empilées en plaçant l'une après l'autre chaque feuille entièrement le long de la vitre et en numérisant chaque feuille par déplacement de l'organe d'acquisition le long de la vitre, au lieu de déplacer chaque feuille par rapport à l'organe d'acquisition pour la numériser.

Avec cette solution, les rouleaux motorisés qui sont portés par le chargeur n'ont plus à avoir la précision que requiert la mise en oeuvre d'une numérisation dans laquelle la feuille doit être déplacée avec précision devant l'organe d'acquisition fixe. D'une manière générale, la technologie mise en oeuvre dans le chargeur peut être simplifiée, ce qui permet également d'éviter des accidents dans le chemin de papier.

Les moteurs utilisés pour actionner les différents rouleaux du chargeur peuvent alors être par exemple des moteurs du type à courant continu ou analogue, qui présentent un coût de fabrication et d'intégration largement inférieur à ceux des moteurs de type pas-à-pas.

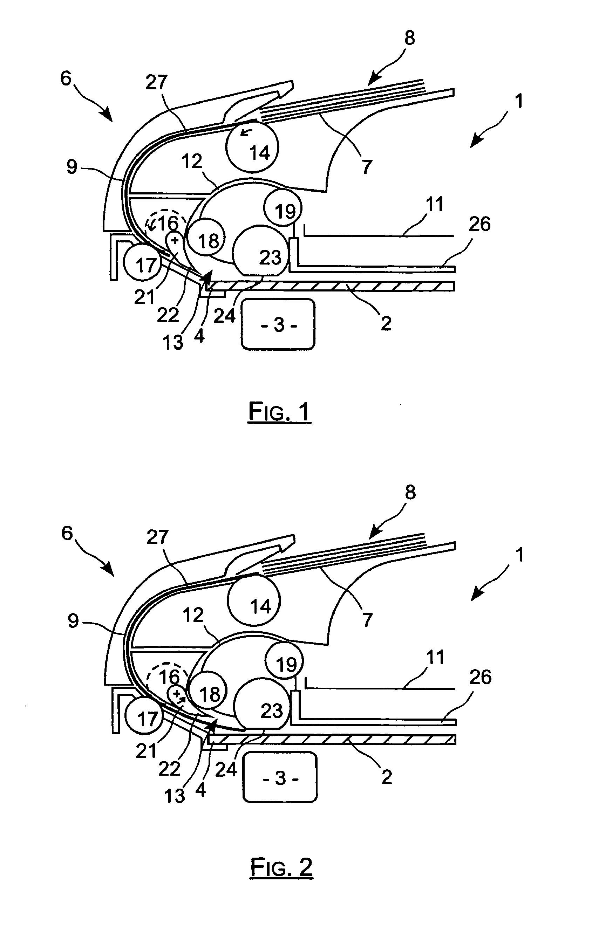

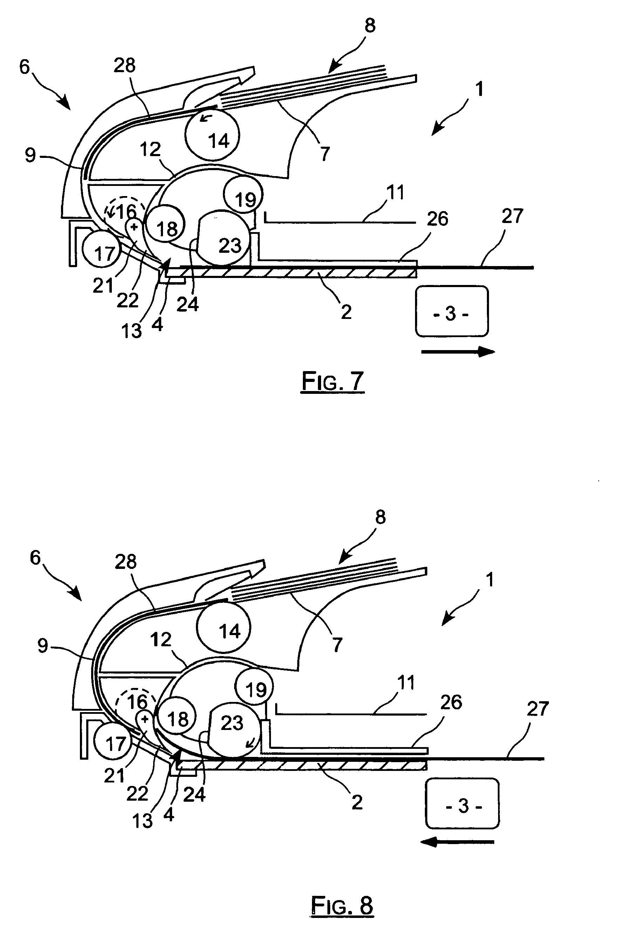

Comme visible dans la figure 1, l'appareil selon l'invention qui est repéré par 1 comprend une vitre 2 généralement horizontale, sous laquelle est monté un organe d'acquisition repéré par 3. Cet organe d'acquisition 3, encore appelé réglette de scan comporte typiquement une source lumineuse associée à une matrice photosensible. Il est mobile entre une position dite de repos correspondant à celle de la figure 1, dans laquelle il est situé au droit d'une région proche de l'extrémité avant 4 de la vitre, et une position dite extrême, correspondant à celle qu'il occupe en figure 7, dans laquelle il est situé au droit de l'extrémité arrière de la vitre qui n'est pas représentée dans les figures.

Lorsque l'organe d'acquisition est déplacé le long de la vitre 2, depuis l'extrémité avant 4 de cette vitre, jusqu'à son extrémité arrière non représentée, il assure, à travers la vitre 2, la numérisation d'une feuille placée en appui sur la face supérieure de cette vitre 2.

Cet appareil comporte un chargeur 6, situé au dessus de la vitre 2, et qui comprend d'une part un bac d'approvisionnement 7 en feuilles à traiter 8 ainsi qu'un chemin 9 d'acheminement de ces feuilles vers la face supérieure de la vitre 3, et d'autre part un bac de collecte 11 ainsi qu'un chemin d'évacuation 12 pour ramener chaque feuille traitée depuis la face supérieure de la vitre 2 vers le bac de collecte.

Comme visible dans les figures, les chemins 9 et 12 débouchent conjointement dans une voie de transfert repérée par 13 qui est située au dessus de la partie avant de la face supérieure de la vitre 2 tout en débouchant tangentiellement à la face supérieure de cette vitre.

Le chargeur 6 est équipé d'un ensemble de rouleaux motorisés prévus pour déplacer les feuilles le long des chemins 9 et 12. Il comporte plus particulièrement un rouleau chargeur 14 qui est situé entre le bac d'approvisionnement 7 et l'entrée du chemin d'acheminement 9, et qui permet lorsqu'il est actionné, d'extraire une feuille de la pile ou liasse 8 pour engager cette feuille dans le chemin d'acheminement 9.

Au niveau de la jonction des extrémités des chemins 9 et 12 avec la voie de transfert 13, le chargeur comporte trois rouleaux 16, 17, 18 qui sont conjointement entraînés en rotation par des moyens non représentés.

Ces trois rouleaux comprennent plus particulièrement un rouleau central 16, un rouleau d'acheminement 17 qui est en appui sur le rouleau central dans une région située dans le chemin d'acheminement 9, et un rouleau d'évacuation 18 qui est en appui sur le rouleau central 16 dans une région située dans le chemin d'évacuation 12. Cet ensemble de trois rouleaux est actionné conjointement par un moteur ou analogue non représenté.

Le chargeur comprend encore un rouleau d'éjection 19 qui est situé au niveau de l'extrémité du chemin d'évacuation 12 qui est la plus proche du bac de collecte 11, et qui permet de terminer l'éjection d'une feuille qui a été traitée pour la placer dans ce bac de collecte 11.

Complémentairement, le chargeur comporte encore, dans la région de la voie de transfert 13, un organe d'aiguillage 21 qui se présente sous forme d'un levier rotatif 21 présentant une extrémité en pointe 22 qui est mobile entre une position basse et une position haute.

L'extrémité en pointe 22 du levier 21 est orientée en direction opposée aux chemins 9 et 12, c'est-à-dire vers l'extrémité arrière de la vitre 2, alors que l'axe de rotation du levier 21 est lui proche des chemins 9 et 12 et de l'axe de rotation du rouleau central 16.

En position basse, l'extrémité 22 du levier 21 est en appui sur une face inférieure de la voie de transfert 13 de manière à orienter une feuille déplacée depuis la vitre 2 vers le chemin d'évacuation 12, et non pas vers le chemin d'acheminement 9, ce qui correspond à la situation de la figure 8.

En position haute, l'extrémité du levier 21 est espacée de la face inférieure de la voie de transfert 13, de manière à permettre le passage d'une feuille depuis le chemin d'acheminement 9 vers la face supérieure de la vitre 2.

Le levier 21 est monté libre, c'est-à-dire que le poids propre de son extrémité 22 tend naturellement à le ramener en position basse, et que l'arrivée du bord d'une feuille déplacée dans le chemin d'acheminement en direction de la vitre 2 soulève ce levier pour autoriser le passage de cette feuille, ce qui correspond à la situation de la figure 2.

L'appareil selon l'invention comprend encore un rouleau de positionnement 23 situé au dessus de la face supérieure de la vitre 2, et en partie avant de cette vitre, c'est-à-dire sensiblement en vis-à-vis de l'organe d'acquisition 3 lorsque celui-ci occupe sa position de repos.

Ce rouleau de positionnement 23 comporte un méplat repéré par 24, de telle manière que lorsque le rouleau occupe une position dite de référence, dans laquelle le méplat s'étend horizontalement en partie inférieure du rouleau comme dans la figure 1, il subsiste entre le méplat du rouleau de positionnement 23 et la face supérieure de la vitre 2 un espace autorisant le passage d'une feuille entre ce rouleau et cette vitre.

Il est également possible de prévoir que le rouleau de positionnement 23 soit monté mobile entre une position dans laquelle il est écarté de la vitre, et une position dans laquelle il est plaqué contre cette vitre. Le rouleau de positionnement 23 peut alors être déplacé entre ces positions par un actionneur soit dédié, soit lié à un autre actionneur de l'appareil.

Complémentairement, l'appareil selon l'invention comprend un plateau supérieur repéré par 26, et qui est mobile verticalement entre une position haute et une position basse, en étant actionné par des moyens non représentés dans les figures.

L'asservissement en position du plateau supérieur durant le cycle de fonctionnement peut être assuré par une commande actionnant des moyens motorisés dédiés, mais il peut aussi bien être assuré mécaniquement par les moyens déplaçant l'organe d'acquisition 3. Dans ce cas, le début du déplacement de l'organe d'acquisition 3 depuis sa position de repos provoque l'abaissement du plateau 26, et son retour vers sa position de repos provoque le soulèvement de ce plateau.

Lorsque le plateau occupe la position haute, comme dans la figure 1, il existe un espace entre la face supérieure de la vitre 2 et la face inférieure du plateau 26. Lorsque le plateau occupe sa position basse, comme dans la figure 7, la face inférieure du plateau 26 est ramenée vers la vitre 2, de manière à plaquer une feuille placée sur cette vitre 2 contre sa face supérieure, afin d'améliorer la qualité de numérisation.

En fonctionnement, lors du traitement d'une pile de feuilles 8, le rouleau de chargement 14 est d'abord actionné pour tourner dans le sens direct sur les figures afin d'extraire une première feuille 27 de la liasse 8 pour l'engager et la déplacer dans le chemin d'acheminement 9, en direction de la face supérieure de la vitre 2, ce qui correspond à la situation de la figure 1.

Lors de son déplacement dans le chemin 9, le bord avant de cette feuille 27 atteint les rouleaux 16 et 17 qui tournent respectivement dans le sens direct et dans le sens indirect, de manière à tirer cette feuille, comme illustré schématiquement en figure 1. Comme on peut le voir, les rouleaux 16, 17, et 18 peuvent être actionnés conjointement par un même moyen de motorisation.

Une fois que le bord avant de la feuille 27 a passé les rouleaux 16 et 17, il rencontre une face inférieure du levier 21 qu'il pousse, ce qui a pour effet de placer ce levier en position haute, ce qui correspond à la situation de la figure 2.

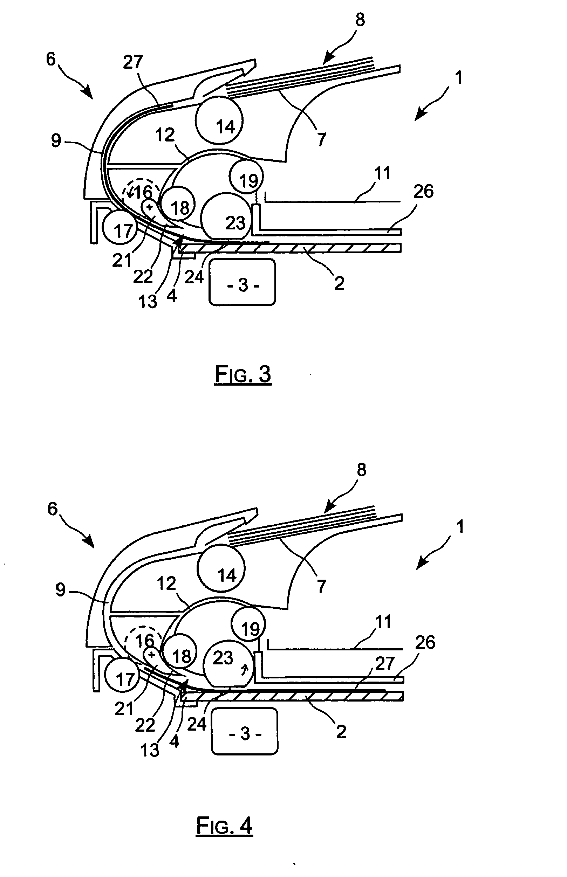

A ce stade, le rouleau de positionnement 23 occupe sa position de référence, son méplat 24 étant horizontal en position basse pour laisser un espace entre ce rouleau 23 et la vitre 2. Le bord avant de la feuille 27 qui est alors déplacée essentiellement par les rouleaux 16 et 17 s'engage dans la voie de transfert 13 pour se placer en appui sur la face supérieure de la vitre 2, en passant entre cette face supérieure et le méplat 24, ce qui est illustré sur la figure 3.

A ce stade, le bord arrière de la feuille 27 passe entre les rouleaux 16 et 17, de sorte qu'elle ne peut plus être déplacée par ces rouleaux, ce qui correspond à la situation de la figure 4.

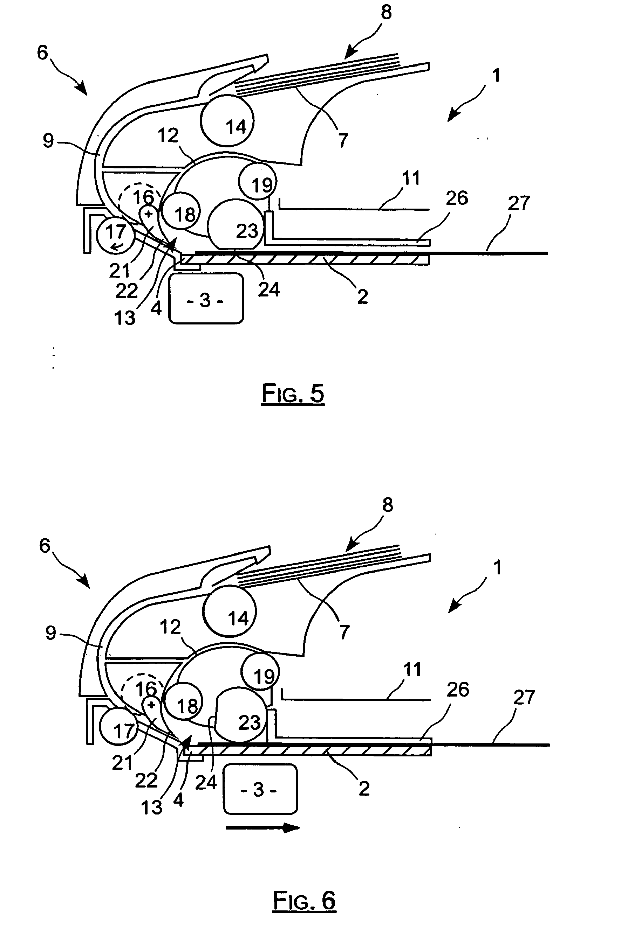

Le rouleau de positionnement 23 est alors commandé pour tourner dans le sens direct sur les figures, de sorte que son méplat 24 quitte alors sa position horizontale basse. La portion cylindrique du rouleau 23 presse alors la feuille contre la vitre 2 pour la faire avancer le long de cette vitre, en direction de son extrémité arrière, ce qui est représenté en figure 5. Durant cette phase, le bord arrière de la feuille 7 passe l'extrémité 22 du levier 21, de sorte que ce levier 21 se replace en position basse sous l'effet de son poids propre.

Le plateau 26 est alors commandé pour s'abaisser sur la feuille 27 afin de la plaquer contre la face supérieure de la vitre 2, et l'organe d'acquisition 3 est piloté pour se déplacer depuis l'extrémité avant 4 de la vitre 2 en direction de l'extrémité arrière de cette vitre, ce qui est illustré en figure 6.

Durant ce déplacement de l'organe d'acquisition 3, les rouleaux 14, 16, 17 et 18 sont actionnés pour tourner de manière à engager une nouvelle feuille 28 dans le chemin d'acheminement 9 en vue de son traitement, ce qui correspond à la figure 7.

Une fois que l'organe d'acquisition 3 a atteint l'extrémité arrière de la vitre 2, c'est-à-dire une fois que la numérisation de la feuille a été effectuée, le plateau 26 est relevé, et le rouleau de positionnement 23 est commandé pour tourner dans le sens indirect de manière à ramener la feuille 27 vers le chemin d'évacuation 12, ce qui correspond au cas de la figure 8. Parallèlement, l'organe d'acquisition est commandé pour être ramené vers sa position de repos.

Durant cette phase, le bord arrière de la feuille 27 avance vers le chemin d'évacuation 12, et vient en appui sur une face supérieure du levier 21 lorsque celui-ci est en position basse, ce qui a pour effet d'orienter cette feuille 27 vers le chemin d'évacuation 12. Comme visible dans les figures, la face supérieure du levier 21 a à cet effet une forme de rampe incurvée assurant une continuité entre le chemin d'évacuation 12 et la face inférieure de la zone de transfert 13.

Pour assurer que le levier 21 est en position basse lorsque le bord arrière de la feuille 27 le rencontre, on peut prévoir d'arrêter la rotation des rouleaux 16, 17, et 18 avant qu'ils n'atteignent la face inférieure du levier 21. Ceci peut également être obtenu en pilotant d'une part ces rouleaux 16, 17 et 18 et d'autre part le rouleau de positionnement 23 pour qu'ils tournent à des vitesses telles que le bord arrière de la feuille 27 atteint le levier 21 avant qu'il ne soit atteint par le bord avant de la nouvelle feuille 28.

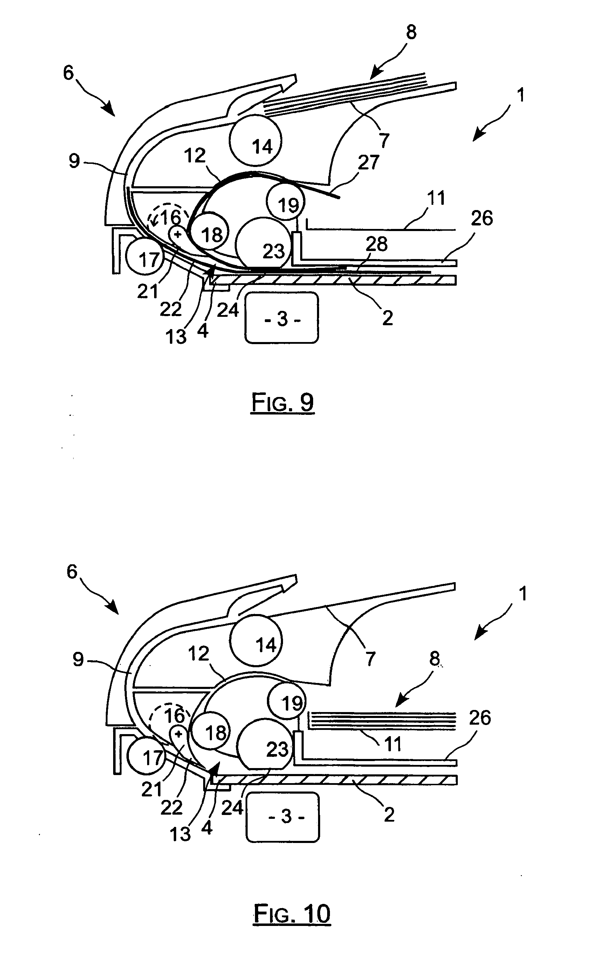

Une fois que la feuille 27 est engagée dans le chemin d'évacuation 12, la feuille 28 continue son mouvement en direction de la face supérieure de la vitre 2, de sorte qu'elle s'engage entre la feuille 27 et la face supérieure de la vitre 2, ce qui correspond à la situation de la figure 9.

Le mouvement des deux feuilles 27 et 28 continue alors, jusqu'à ce que le bord avant de la feuille 27 atteigne le rouleau de positionnement 23 dont le dimensionnement est prévu pour qu'il occupe alors à nouveau sa position de référence. La feuille 27 est alors complètement extraite par le rouleau d'éjection 19 pour être placée dans le bac de collecte 11.

Lorsque le bord avant de la première feuille 27 a dépassé le rouleau de positionnement 23, celui-ci est alors commandé pour tourner à nouveau dans le sens direct, de manière à continuer le déplacement de la nouvelle feuille 28 le long de la face supérieure de la vitre 2, jusqu'à ce que le bord avant de cette feuille soit à hauteur de l'extrémité arrière de la vitre.

La numérisation de la nouvelle feuille par déplacement de l'organe d'acquisition 3 peut alors être déclenchée, ce qui permet de continuer le cycle de traitement de la liasse 8, en engageant une nouvelle feuille de cette liasse dans le chemin d'amenée 9 par actionnement des rouleaux 16, 17 et 18, afin de reprendre un nouveau cycle à une étape correspondant à la figure 7.

Comme représenté dans la figure 10, une fois que la liasse de feuilles 8 a été complètement traitée, elle se retrouvé entièrement placée dans le bac de collecte 11 selon un classement et une orientation identiques à ceux qu'elle avait dans le bac d'approvisionnement 7.

L'invention permet ainsi à l'appareil de fonctionner dans son mode de traitement d'une pile de feuille de manière analogue à son fonctionnement lorsqu'une feuille est traitée de manière unitaire, c'est-à-dire que c'est l'organe d'acquisition qui est déplacé le long de la vitre pour assurer la numérisation, et non pas la feuille qui doit être déplacée par rapport à l'organe d'acquisition.

En ce qui concerne le fonctionnement unitaire, c'est-à-dire lorsque l'utilisateur souhaite numériser une feuille unique, il consiste, comme on l'aura compris à ouvrir le chargeur 6 de manière à rendre la face supérieure de la vitre 2 accessible pour y placer la feuille à numériser.

L'utilisateur rabat ensuite le chargeur sur la vitre 2 et déclenche la numérisation, ce qui provoque le déplacement de l'organe d'acquisition le long de la vitre 2. A cet effet, le chargeur qui est représenté uniquement dans sa position rabattue dans les figures, est par exemple articulé soit complètement, soit uniquement par sa partie supérieure, sur un châssis de l'appareil, de manière à pouvoir pivoter à la manière d'un capot autour d'un axe longitudinal de la vitre.

## Revendications

1. Appareil (1) de numerisation de feuilles (8, 27, 28), comprenant une vitre (2) telle que chaque feuille à traiter peut être placée entièrement le long de cette vitre (2), ainsi qu'un organe d'acquisition (3) mobile par rapport à cette vitre (2), cet organe d'acquisition incluant une matrice photosensible et une source lumineuse, cet appareil (1) comprenant un chargeur (6) situé au dessus de la vitre (2), ce chargeur (6) incluant un chemin d'acheminement (9) des feuilles à numériser (8, 27, 28) ainsi qu'un chemin d'évacuation (12) des feuilles
numérisées, ce chargeur (6) étant équipé de rouleaux commandés (14, 16, 17, 18, 19) pour déplacer des feuilles dans ces chemins, **caractérisé en ce que** le chemin d'acheminement (9) et le chemin d'évacuation (12) débouchent conjointement dans une même voie de transfert (13) située au niveau d'une extrémité (4) d'une face supérieure de la vitre (2) en étant orientée tangentiellement à cette face supérieure, **en ce que** le chargeur (6) comporte un rouleau de positionnement (23) situé à proximité de la voie de transfert (13) et au dessus de la vitre pour positionner et déplacer les feuilles à traiter le long de la vitre, et un organe d'aiguillage (21) assurant qu'une feuille (27, 28) déplacée par le rouleau de positionnement (23), après avoir été numérisé, depuis la vitre (2) vers la voie de transfert (13) est orientée dans le chemin d'évacuation (12), la numérisation de chaque feuille étant assurée, lorsque cette dernière est entièrement positionnée le long de la vitre par le rouleau de positionnement, en déplaçant l'organe d'acquisition par rapport à la vitre.

2. Appareil selon la revendication 1, dans lequel le rouleau de positionnement (23) comprend un méplat (24).

3. Appareil selon la revendication 1, dans lequel le rouleau de positionnement (23) est monté mobile entre une position dans laquelle il est plaqué contre la vitre et une position dans laquelle il est écarté de la vitre (2).

4. Appareil selon l'une des revendications 1 à 3, dans lequel le chargeur (6) comprend un rouleau d'acheminement (17) et un rouleau d'évacuation (18) ainsi qu'un rouleau central (16) entraînés conjointement, le rouleau central (16) étant en appui sur le rouleau d'acheminement (17) au niveau du chemin d'acheminement (9), le rouleau central (16) étant en appui sur le rouleau d'évacuation (18) au niveau du chemin d'évacuation (12).

5. Appareil selon l'une des revendications précédentes, dans lequel le chargeur (6) comprend un plateau supérieur (26) déplaçable entre une position haute dans laquelle il est espacé de la vitre (2) et une position dite basse dans laquelle il est en appui sur la vitre (2) ou sur une feuille (27, 28) située sur cette vitre (2).

6. Appareil selon l'une des revendications précédentes, dans lequel l'organe d'aiguillage (21) comprend un levier rotatif (21) situé à la jonction des chemins (9, 12) et de la voie de transfert (13), ce levier (21) présentant une extrémité en pointe (22) orientée en direction opposée des chemins (9, 12), cette extrémité en pointe (22) étant mobile entre une position basse en appui sur une face inférieure de la voie de transfert (13) et une position haute espacée de cette face inférieure.

## Claims

1. Apparatus (1) for scanning sheets (8, 27, 28), the apparatus including both a window (2) such that each sheet for scanning may be placed in full along said window (2), and an acquisition member (3) that is movable relative to the window (2), the acquisition member including a photosensitive matrix and a light source, said apparatus (1) including a loader (6) situated above the window (2), the loader (6) including a feed path (9) for feeding sheets for scanning (8, 27, 28) and a removal path (12) for removing scanned sheets, the loader (6) being fitted with controlled rollers (14, 16, 17, 18, 19) for moving the sheets along said paths, the apparatus being **characterized in that** the feed path (9) and the removal path (12) both open out into a common transfer passage (13) situated at one end (4) of a top face of the window (2) while being oriented tangentially to said top face, **in that** the loader (6) includes a positioning roller (23) situated close to the transfer passage (13) and to the top of the window to position and move the sheets for scanning along the window, and a deflector member (21) ensuring that a sheet (27, 28), after it has been scanned, when moved by the positioning roller (23) from the window (2) towards the transfer passage (13) is oriented into the removal path (12), each sheet being scanned, when the sheet is positioned in full along the window by the positioning roller, by moving the acquisition member relative to the window.

2. Apparatus according to claim 1, wherein the positioning roller (23) includes a flat (24).

3. Apparatus according to claim 1, wherein the positioning roller (23) is mounted to move between a position in which it is pressed against the window and a position in which it is spaced apart from the window (2).

4. Apparatus according to any one of claims 1 to 3, wherein the loader (6) includes a feed roller (17) and a removal roller (18) together with a central roller (16), the rollers being driven together, the central roller (16) bearing against the feed roller (17) in the feed path (9), the central roller (16) bearing against the removal roller (18) in the removal path (12).

5. Apparatus according to any preceding claim, wherein the loader (6) comprises a top plate (26) movable between a high position in which it is spaced apart from the window (2) and a "low" position in which it bears against the window (2) or a sheet (27, 28) situated on said window (2).

6. Apparatus according to any preceding claim, wherein the deflector member (21) comprises a rotary lever (21) situated at the junction between the feed and removal paths (9, 12) and the transfer passage (13), the lever (21) presenting a pointed end (22) pointing away from the feed and removal paths (9, 12), said pointed end (22) being movable between a low position bearing against a bottom face of the transfer passage (13) and a high position spaced apart from said bottom face.

## Patentansprüche

1. Vorrichtung (1) zur Digitalisierung von Blättern (8, 27, 28), umfassend eine Glasscheibe (2), die derart ist, dass jedes zu verarbeitende Blatt vollständig längs dieser Glasscheibe (2) platziert werden kann, sowie ein Erfassungselement (3), das relativ zu dieser Glasscheibe (2) beweglich ist, wobei dieses Erfassungselement eine lichtempfindliche Matrix und eine Lichtquelle enthält, wobei diese Vorrichtung (1) eine Ladevorrichtung (6) umfasst, die sich oberhalb der Glasscheibe (2) befindet, wobei diese Ladevorrichtung (6) eine Zuführungsbahn (9) zum Zuführen von zu digitalisierenden Blättern (8, 27, 28) sowie eine Abführungsbahn (12) zum Abführen von digitalisierten Blättern einschließt, und wobei diese Ladevorrichtung (6) mit gesteuerten Rollen (14, 16, 17, 18, 19) versehen ist, um Blätter in diesen Bahnen zu verschieben, **dadurch gekennzeichnet, dass** die Zuführungsbahn (9) und die Abführungsbahn (12) gemeinsam in eine selbe Übergabestrecke (13) münden, die sich im Bereich eines Endes (4) einer oberen Fläche der Glasscheibe (2) befindet, indem sie tangential zu dieser oberen Fläche ausgerichtet ist, dass die Ladevorrichtung (6) eine Positionierungsrolle (23) umfasst, die sich nahe der Übergabestrecke (13) und oberhalb der Glasscheibe befindet, um die zu verarbeitenden Blätter entlang der Glasscheibe zu positionieren und zu verschieben, sowie ein Weichenelement (21), das sicherstellt, dass ein Blatt (27, 28), das von der Positionierungsrolle (23) nach seiner Digitalisierung von der Glasscheibe (2) in Richtung der Übergabestrecke (13) verschoben wurde, in die Abführungsbahn (12) gelenkt wird, wobei die Digitalisierung jedes Blattes nach dessen vollständiger Positionierung längs der Glasscheibe durch die Positionierungsrolle dadurch sichergestellt wird, dass das Erfassungselement relativ zur Glasscheibe verschoben wird.

2. Vorrichtung nach Anspruch 1, wobei die Positionierungsrolle (23) eine Abflachung (24) umfasst.

3. Vorrichtung nach Anspruch 1, wobei die Positionierungsrolle (23) zwischen einer gegen die Glasscheibe gedrückten Position und einer von der Glasscheibe (2) entfernten Position beweglich gelagert ist.

4. Vorrichtung nach einem der Ansprüche 1 bis 3, wobei die Ladevorrichtung (6) eine Zuführungsrolle (17) und eine Abführungsrolle (18) sowie eine zentrale Rolle (16) umfasst, die gemeinsam angetrieben werden, wobei die zentrale Rolle (16) im Bereich der Zuführungsbahn (9) an der Zuführungsrolle (17) anliegt und wobei die zentrale Rolle (16) im Bereich der Abführungsbahn (12) an der Abführungsrolle (18) anliegt.

5. Vorrichtung nach einem der vorhergehenden Ansprüche, wobei die Ladevorrichtung (6) eine obere Platte (26) umfasst, die zwischen einer oberen Position, in der sie zur Glasscheibe (2) beabstandet ist, und einer sogenannten unteren Position verschiebbar ist, in der sie an der Glasscheibe (2) oder an einem auf dieser Glasscheibe (2) befindlichen Blatt (27, 28) anliegt.

6. Vorrichtung nach einem der vorhergehenden Ansprüche, wobei das Weichenelement (21) einen Drehhebel (21) umfasst, der sich an der Verbindungsstelle der Bahnen (9, 12) und der Übergabestrecke (13) befindet, wobei dieser Hebel (21) ein spitzes Ende (22) aufweist, das in eine zu den Bahnen (9, 12) entgegengesetzte Richtung gerichtet ist, wobei dieses spitze Ende (22) zwischen einer unteren Position in Anlage an einer unteren Fläche der Übergabestrecke (13) und einer von dieser unteren Fläche entfernten oberen Position beweglich ist.
